# EUROPEAN PATENT APPLICATION

(11) **EP 4 185 006 A1**
(43) Date of publication of application: **24.05.2023**
(21) Application number: 20948080.5
(22) Date of filing: 03.08.2020
(51) Int. Cl.: H04W 36/00

(54) **METHOD AND DEVICE FOR COMMUNICATION**

(71) Applicant: Huawei Technologies Co., Ltd., Shenzhen, Guangdong 518129 (CN)
(72) Inventor: GENG, Tingting, Shenzhen, Guangdong 518129 (CN); WU, Yedan, Shenzhen, Guangdong 518129 (CN); YAN, Le, Shenzhen, Guangdong 518129 (CN)
(74) Representative: Isarpatent
(86) International application number: PCT/CN2020/106663
(87) International publication number: WO 2022/027200

(57) **Abstract**

This application discloses a communication method and apparatus. The method includes: In a scenario in which a second cell of a second network device supports a plurality of PLMNs, a first network device may send, to the second network device, a first request message including location information of a terminal device and information about a first PLMN, where the first PLMN is a target PLMN that is determined by the first network device and that is accessed by the terminal device. In this way, the second network device may determine, based on the location information of the terminal device in the first request message, whether a PLMN that the terminal device requests to access is appropriate. If a location of the terminal device is located outside a first area corresponding to the first PLMN, the second network device may reject a handover request of the terminal device, to avoid a case in which the terminal device accesses from a country/an operator to which the location of the terminal device does not belong, and ensure that communication behavior of the terminal device of an NTN cell complies with communication policies of a country/an operator to which the location of the terminal device belongs.

## Description

### TECHNICAL FIELD

This application relates to the field of wireless communication technologies, and in particular, to a communication method and apparatus.

### BACKGROUND

A non-terrestrial network (non-terrestrial network, NTN) communication system deploys all or some functions of an access network device on a non-terrestrial device such as a high altitude platform station or a satellite, to provide seamless coverage for a terminal device. In addition, because the high altitude platform station or the satellite is located at high altitude, the high altitude platform station or the satellite is less susceptible to natural disasters. Therefore, reliability of the NTN communication system is high.

Another important feature of the NTN communication system is that a coverage range of an NTN cell is usually large, for example, a coverage diameter of a cell may reach dozens of to thousands of kilometers. Therefore, there may be an NTN cell that covers geographical areas of a plurality of countries or service areas of a plurality of operators. For example, an NTN system is a satellite communication system. A satellite may indicate, by broadcasting information about a plurality of public land mobile networks (public land mobile networks, PLMNs), that the satellite support services of a plurality of countries or operators.

In the conventional technology, provided that a terminal device is located in a coverage range of a cell, the terminal device can receive a signal of a satellite, and report a measurement result based on the received signal, so that a network performs handover decision based on the measurement result reported by the terminal device. However, in a scenario in which a target cell supports a plurality of PLMNs, different PLMNs correspond to different communication policies. If handover to the target cell is performed only based on a cell measurement result reported by the terminal device, the terminal device may request to access a PLMN that does not match a location of the terminal device. In this case, communication behavior of the terminal device cannot meet requirements of communication policies of the PLMN that the terminal device requests to access. Consequently, a handover procedure fails, affecting communication performance.

### SUMMARY

A communication method and apparatus in embodiments of this application are provided, to help a terminal device to access/hand over to a target cell from a PLMN that matches a location of the terminal device, so as to meet corresponding requirements of communication policies, where the target cell is an NTN cell supporting a plurality of PLMNs.

According to a first aspect, an embodiment of this application provides a communication method. The method may be performed by a first network device, or may be performed by a component (for example, a chip or a circuit) configured in a first network device. In the following descriptions of this application, an example in which the first network device performs the method is used for description.

The method may include: A first network device sends a first request message to a second network device, where the first request message is used to request to access a terminal device to a second cell of the second network device, the first request message includes location information of the terminal device and information about a first PLMN, and the first PLMN is a target PLMN that is determined by the first network device and that is accessed by the terminal device; and the first network device receives a first response message from the second network device, where the first response message includes information about a second PLMN, and the second PLMN is a PLMN that the second network device allows the terminal device to access. A location of the terminal device is located outside a first area corresponding to the first PLMN, and is located within a second area corresponding to the second PLMN. Both the first PLMN and the second PLMN are PLMNs supported by the second network device.

According to the foregoing technical solution, in a scenario in which the second cell supports a plurality of PLMNs, the first network device may provide the location information of the terminal device to the second network device, so that a target network device determines, based on the location information of the terminal device, whether a PLMN that the terminal device requests to access is appropriate. This avoids a case in which the terminal device accesses from a country/an operator to which the location of the terminal device does not belong, and ensures that communication behavior of the terminal device of an NTN cell complies with communication policies of a country/an operator to which the location of the terminal device belongs.

In a possible design of the first aspect, the method further includes: The first network device receives second indication information from the terminal device or the second network device, where the second indication information indicates that the second cell is an NTN cell, or indicates that the second cell is an NTN cell and that the second cell supports at least two PLMNs.

In a possible design of the first aspect, the method further includes: The first network device receives cell information of the second cell from the terminal device or the second network device, where the cell information of the second cell includes information about the at least two PLMNs supported by the second cell, and the at least two PLMNs include the first PLMN and the second PLMN.

In a possible design of the first aspect, the first response message further includes second indication information indicating that the location of the terminal device does not match the first PLMN that the terminal device requests to access.

In a possible design of the first aspect, the method further includes: The first network device sends third indication information to the terminal device, where the third indication information indicates the terminal device to include the location information of the terminal device when reporting a measurement result of the second cell.

In a possible design of the first aspect, that a first network device sends a first request message to a second network device may specifically include: The first network device sends the first request message to the second network device via a core network device. Correspondingly, that the first network device receives a first response message from the second network device may specifically include: The first network device receives, from the core network device, the first response message from the second network device.

According to a second aspect, an embodiment of this application provides a communication method. The method may be performed by a second network device, or may be performed by a component (for example, a chip or a circuit) configured in a second network device. In the following descriptions of this application, an example in which the second network device performs the method is used for description.

The method may include: A second network device receives a first request message from a first network device, where the first request message is used to request to access a terminal device to a cell of the second network device, the first request message includes location information of the terminal device and information about a first PLMN, and the first PLMN is a target PLMN that is determined by the first network device and that is accessed by the terminal device; and if a location of the terminal device is located outside a first area corresponding to the first PLMN, and is located within a second area corresponding to a second PLMN, the second network device determines the second PLMN as a target PLMN that the terminal device is allowed to access, where both the first PLMN and the second PLMN are PLMNs supported by the second network device.

In a possible design of the second aspect, the method further includes: The second network device sends first indication information to the first network device, where the first indication information indicates that a second cell is an NTN cell, or the second indication information indicates that a second cell is an NTN cell and that the second cell supports at least two PLMNs.

In a possible design of the second aspect, the method further includes: The second network device sends cell information of the second cell to the first network device, where the cell information of the second cell includes information about the at least two PLMNs supported by the second cell, and the at least two PLMNs include the first PLMN and the second PLMN.

In a possible design of the second aspect, a first response message further includes second indication information indicating that the location of the terminal device does not match the first PLMN that the terminal device requests to access.

In a possible design of the second aspect, that a second network device receives a first request message from a first network device may specifically include: The second network device receives, from a core network device, the first request message from the first network device. Correspondingly, that the second network device sends a first response message to the first network device may specifically include: The second network device sends the first response message to the first network device via the core network device.

According to a third aspect, an embodiment of this application provides a communication method. The method may be performed by a terminal device, or may be performed by a component (for example, a chip or a circuit) configured in a terminal device. In the following descriptions of this application, an example in which the terminal device performs the method is used for description.

The method may include: A terminal device receives third indication information from a first network device, where the third indication information indicates the terminal device to include location information of the terminal device when reporting a measurement result of a second cell, and the second cell is a cell of the second network device; and the terminal device sends a measurement report to the first network device, where the measurement report includes the location information of the terminal device.

In a possible design of the third aspect, the method further includes: The terminal device sends first indication information to the first network device, where the first indication information indicates that the second cell is an NTN cell, or indicates that the second cell is an NTN cell and that the second cell supports at least two PLMNs.

In a possible design of the third aspect, the method further includes: The terminal device sends cell information of the second cell to the first network device, where the cell information of the second cell includes information about the at least two PLMNs supported by the second cell.

According to a fourth aspect, an embodiment of this application provides a communication apparatus. The apparatus may have functions of implementing the first network device according to any one of the first aspect or the possible designs of the first aspect, or have functions of implementing the second network device according to any one of the second aspect or the possible designs of the second aspect. The apparatus may be a network device, or may be a chip included in a network device.

The apparatus has functions of implementing the terminal device according to any one of the third aspect or the possible designs of the third aspect, or has functions of implementing the first network device according to any one of the fourth aspect or the possible designs of the fourth aspect. The apparatus may be a terminal device, or may be a chip included in a terminal device.

The functions of the communication apparatus may be implemented by hardware, or may be implemented by hardware executing corresponding software. The hardware or the software includes one or more modules, units, or means (means) corresponding to the functions.

In a possible design, a structure of the apparatus includes a processing module and a transceiver module. The processing module is configured to support the apparatus in performing a corresponding function of the first network device according to any one of the first aspect or the designs of the first aspect, a corresponding function of the second network device according to any one of the second aspect or the designs of the second aspect, or a corresponding function of the terminal device according to any one of the third aspect or the possible designs of the third aspect. The transceiver module is configured to support communication between the apparatus and another communication device. For example, when being a first network device, the apparatus may send a first request message to a second network device, and receive first response information from the second network device. The communication apparatus may further include a storage module. The storage module is coupled to the processing module, and stores program instructions and data that are necessary for the apparatus. In an example, the processing module may be a processor, the transceiver module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, to enable the apparatus to perform the method according to any one of the first aspect or the possible designs of the first aspect, the method according to any one of the second aspect or the possible designs of the second aspect, or the method according to any one of the third aspect or the possible designs of the third aspect. Optionally, the apparatus further includes a communication interface, and the processor is coupled to the communication interface. When the apparatus is a network device or a terminal device, the communication interface may be a transceiver or an input/output interface. When the apparatus is a chip included in a network device or a terminal device, the communication interface may be an input/output interface of the chip. Optionally, the transceiver may be a transceiver circuit, and the input/output interface may be an input/output circuit.

According to a fifth aspect, an embodiment of this application provides a chip system, including a processor. The processor is coupled to a memory, and the memory is configured to store a program or instructions. When the program or the instructions is/are executed by the processor, the chip system is enabled to implement the method according to any one of the first aspect or the possible designs of the first aspect, the method according to any one of the second aspect or the possible designs of the second aspect, or the method according to any one of the third aspect or the possible designs of the third aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a sixth aspect, an embodiment of this application provides a computer-readable storage medium, storing a computer program or instructions. When the computer program or the instructions is/are executed, a computer is enabled to perform the method according to any one of the first aspect or the possible designs of the first aspect, the method according to any one of the second aspect or the possible designs of the second aspect, or the method according to any one of the third aspect or the possible designs of the third aspect.

According to a seventh aspect, an embodiment of this application provides a computer program product. When a computer reads and executes the computer program product, the computer is enabled to perform the method according to any one of the first aspect or the possible designs of the first aspect, the method according to any one of the second aspect or the possible designs of the second aspect, or the method according to any one of the third aspect or the possible designs of the third aspect.

According to an eighth aspect, an embodiment of this application provides a communication system. The communication system includes the first network device, the second network device, and at least one terminal device in the foregoing aspects. The first network device may be a source network device, and the second network device may be a target network device. Optionally, the communication system may further include a core network device.

### BRIEF DESCRIPTION OF DRAWINGS

FIG. 1a and FIG. 1b each are a schematic diagram of a network architecture of a satellite communication system to which an embodiment of this application is applicable;
FIG. 2 is a schematic diagram in which different areas covered by a satellite cell correspond to different PLMNs according to an embodiment of this application;
FIG. 3 is a schematic flowchart of a communication method according to an embodiment of this application;
FIG. 4 is a schematic diagram in which a first network device determines that a second cell is an NTN cell, or determines that a second cell is an NTN cell and that the second cell supports at least two PLMNs according to an embodiment of this application;
FIG. 5 shows an example of a communication method according to an embodiment of this application;
FIG. 6 shows another example of a communication method according to an embodiment of this application;
FIG. 7 is a schematic diagram of neighboring cells of a first cell according to an embodiment of this application;
FIG. 8 is a schematic diagram in which a first network device indicates a terminal device to report location information according to an embodiment of this application;
FIG. 9 is a schematic diagram of a structure of a communication apparatus according to an embodiment of this application;
FIG. 10 is a schematic diagram of another structure of a communication apparatus according to an embodiment of this application;
FIG. 11 is a schematic diagram of a structure of another communication apparatus according to an embodiment of this application; and
FIG. 12 is a schematic diagram of another structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The technical solutions in embodiments of this application may be applied to various communication systems, for example, a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system, an NR system, a communication system applied to future, or another similar communication system.

The technical solutions provided in embodiments of this application may be applied to a non-terrestrial network (NTN) communication system, or may be applied to a scenario in which an NTN and a terrestrial network (terrestrial network, TN) are deployed together. The NTN communication system may include a satellite communication system, a high altitude platform station (high altitude platform station, HAPS) communication system, or another non-terrestrial communication system.

The following describes in detail a network architecture to which this application is applied by using an example in which the NTN communication system is a satellite communication system.

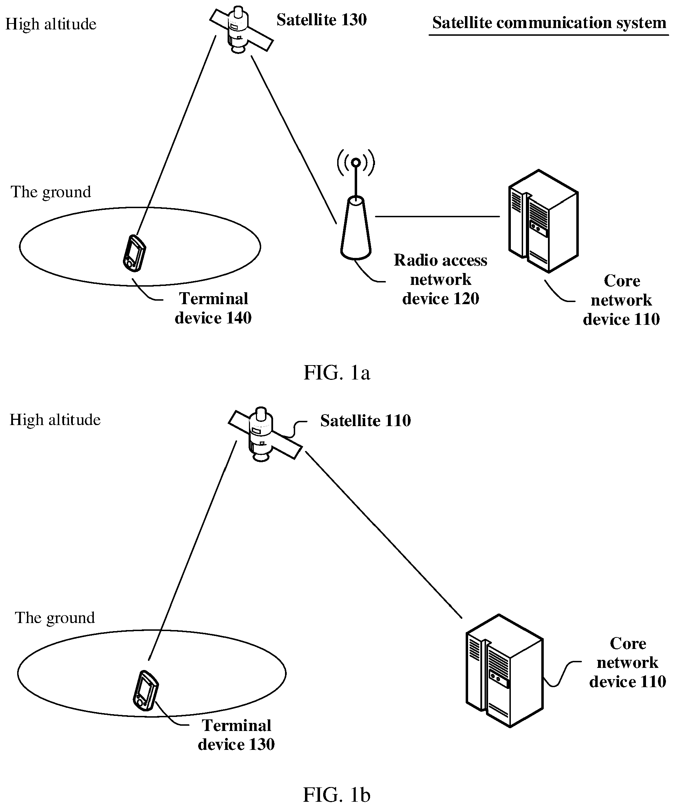

FIG. 1a is a schematic diagram of a network architecture of a satellite communication system to which an embodiment of this application is applicable. The network architecture includes a core network device 110, a radio access network device 120, a satellite 130, and at least one terminal device (for example, a terminal device 140 shown in FIG. 1a). In an example, the core network device, the radio access network device, and the terminal device in FIG. 1a are located on the ground, and the satellite is located at high altitude.

The radio access network device communicates with the core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. It should be understood that the radio access network device described in embodiments of this application may correspond to different devices in different communication systems. For example, in a 5G system, the radio access network device corresponds to a 5G access network device, for example, a gNB or a ng-eNB, and in a 4G system, corresponds to a 4G access network device, for example, an eNB or an en-gNB.

During communication between the radio access network device and the terminal device, a signal is forwarded by using the satellite. To be specific, the satellite receives a signal of the radio access network device and forwards the signal to the ground to generate a satellite cell, to provide service coverage for the terminal device on the ground. In this case, the satellite is equivalent to a relay node or a transponder. Therefore, this scenario may also be referred to as a transparent forwarding (transparent) form of the satellite.

In the transparent forwarding form, the satellite cell may be fixed on the ground (which may be denoted as a "fixed cell"), or may move with the movement of the satellite (which may be denoted as a "moving cell"). In a "fixed cell" scenario, a satellite cell is fixed on the ground. This means that coverage of the satellite cell on the ground is fixed, or fixed within a period of time, or permanently fixed. For example, for a geostationary earth orbit satellite, because the satellite remains static relative to the ground, a satellite cell formed by the satellite is generally fixed relative to the ground. For a low-earth orbit satellite, because the satellite moves relative to the ground, the satellite may adjust a transmit angle of an antenna of the satellite or another physical parameter, to make its satellite cell fixed relative to the ground.

In a "moving cell" scenario, a satellite cell moves with the movement of a satellite. To be specific, when the satellite moves, the satellite cell on the ground moves accordingly with the satellite. Usually, a reason for generating a moving cell is that as a satellite moves, the satellite does not dynamically adjust a beam direction. As a result, a projection of a beam generated by the satellite on the ground moves as the satellite moves.

It should be noted that an existence scenario of a moving cell is not specifically limited in embodiments of this application. When the satellite provides service coverage in the transparent forwarding form, a possible existence scenario of a moving cell may be as follows. The satellite establishes a connection to an original radio access network device. As the satellite moves, a cell of the original radio access network device whose signal is forwarded by the satellite moves with the satellite for a period of time. In other words, the satellite maintains the connection to the original radio access network device for a period of time. At a moment, the connection between the satellite and the original radio access network device is disconnected due to a long distance, a weak signal, or the like, and the satellite is connected to a new radio access network device. Then, the satellite starts to forward a signal of the new radio access network device, to generate a new satellite cell. It may be understood that although the satellite keeps moving, a location of the radio access network device on the ground remains unchanged. Therefore, in a scenario in which there is a moving cell, if a satellite forwards a signal of a radio access network device on the ground, a formed satellite cell of the radio access network device moves accordingly in a specific range as the satellite runs, but the movement range of the satellite cell usually surrounds the radio access network device.

FIG. 1b is a schematic diagram of another network architecture of a satellite communication system to which an embodiment of this application is applicable. The network architecture includes a core network device 110, a satellite 130, and at least one terminal device (for example, a terminal device 140 shown in FIG. 1b). In an example, the core network device and the terminal device in FIG. 1b are located on the ground, and the satellite is located at high altitude.

A difference from the network architecture shown in FIG. 1a lies in that a radio access network device, for example, a base station, may be deployed on the satellite in the network architecture shown in FIG. 1b. The satellite may generate a cell signal, and forward the cell signal to the ground to form a satellite cell, to provide service coverage for a terminal device on the ground. Therefore, this scenario may also be referred to as a satellite regenerative (regenerative) form.

In the regeneration form, the satellite cell moves as the satellite moves. To be specific, when the satellite moves, a cell generated by the satellite moves accordingly on the ground. Therefore, the satellite cell may be referred to as a "moving cell". Because the "moving cell" is generated by the satellite, the "moving cell" of the satellite may move on the ground following an orbit of the satellite. Generally, after the satellite moves away, a new satellite comes, to ensure continuous coverage if possible. A coverage area of the new satellite may be the same as or different from that of the previous satellite. It may be understood that due to different running directions, beam transmitting directions, and beam transmitting capabilities of satellites, ground coverage areas of two satellites may not be completely the same.

Although FIG. 1a and FIG. 1b each show only one terminal device, it should be understood that the radio access network device or satellite or core network device may provide a service for one or more terminal devices. Quantities of core network devices, radio access network devices, satellites, and terminal devices included in the satellite communication system are not limited in embodiments of this application. In addition, the terminal device may be at a fixed location, or may be mobile. This is not limited in this application.

Communication between a radio access network device and a terminal device and communication between terminal devices may be performed over a licensed spectrum (licensed spectrum), over an unlicensed spectrum (unlicensed spectrum), or over both a licensed spectrum and an unlicensed spectrum. Communication between a radio access network device and a terminal device and communication between terminal devices may be performed over a spectrum below 6 gigahertz (gigahertz, GHz), over a spectrum above 6 GHz, or over both a spectrum below 6 GHz and a spectrum above 6 GHz. A spectrum resource used between a radio access network device and a terminal device is not limited in embodiments of this application.

The network architecture and the service scenario described in embodiments of this application are intended to describe the technical solutions in embodiments of this application more clearly, and do not constitute any limitation on the technical solutions provided in embodiments of this application. A person of ordinary skill in the art may know that, with evolution of a communication network architecture and emergence of new service scenarios, the technical solutions provided in embodiments of this application are also applicable to similar technical problems.

A cell in embodiments of this application may be an NTN cell. The following describes the cell in this application in detail by using an example in which the NTN cell is a satellite cell.

In addition to the foregoing mobility-related feature, the satellite cell has another important feature of large coverage. A coverage diameter of a satellite cell can reach tens of kilometers to thousands of kilometers. Therefore, there is a satellite cell that covers geographical areas of a plurality of countries or service areas of a plurality of operators. Generally, a satellite may indicate, by broadcasting information about a plurality of PLMNs (such as PLMN identification information), information about an access and mobility management function (access and mobility management function, AMF) (such as AMF identification information), a network service provider (also referred to as network identification information, such as standalone non-public network (standalone non-public network, SNPN) identification information or closed access group (closed access group, CAG) identification information), or service type information (such as a slice identifier), that the satellite may support a plurality of countries/operators/network service providers/service types. The terminal device may determine an appropriate country/operator/network service provider/service type for access based on a location of the terminal device and a mapping relationship between information about an area covered by a cell and a country/an operator/a network service provider/a service type.

For example, a physical cell C covers geographical areas of a country A and a country B. The country A corresponds to a PLMN1/AMF1, and the country B corresponds to a PLMN2/AMF2. In this case, the physical cell C may broadcast information about the PLMN1 and information about the PLMN2. It may be understood that, that the country A corresponds to a PLMN1/AMF1 means that a PLMN that manages the cell C and that is deployed in the country A is the PLMN1, or an AMF connected to an access network device to which the cell C belongs is the AMF1; and that the country B corresponds to a PLMN2/AMF2 means that a PLMN that manages the cell C and that is deployed in the country B is the PLMN2, or an AMF connected to an access network device to which the cell C belongs is the AMF2.

In this way, for UE1 located in the country A and located within a coverage range of the cell C, the UE1 may access the cell C via the PLMN1/AMF1, or the UE1 may access the cell C via the PLMN1/AMF1 when the UE1 needs to access the cell C, or the UE1 may access a cell corresponding to the PLMN1/AMF1 when the UE1 needs to access the cell C, or a core network device connected to an access network device that may be accessed by the UE1 is the AMF1 and the access network device that may be accessed by the UE1 belongs to the PLMN1, when the UE1 needs to access the cell C.

Similarly, for UE2 located in the country B and located within a coverage range of the cell C, the UE2 may access the cell C via the PLMN2/AMF2, or the UE2 may access the cell C via the PLMN2/AMF2 when the UE2 needs to access the cell C, or the UE2 may access a cell corresponding to the PLMN2/AMF2 when the UE2 needs to access the cell C, or a core network device connected to an access network device that may be accessed by the UE2 is the AMF2 and the access network device that may be accessed by the UE2 belongs to the PLMN2, when the UE2 needs to access the cell C.

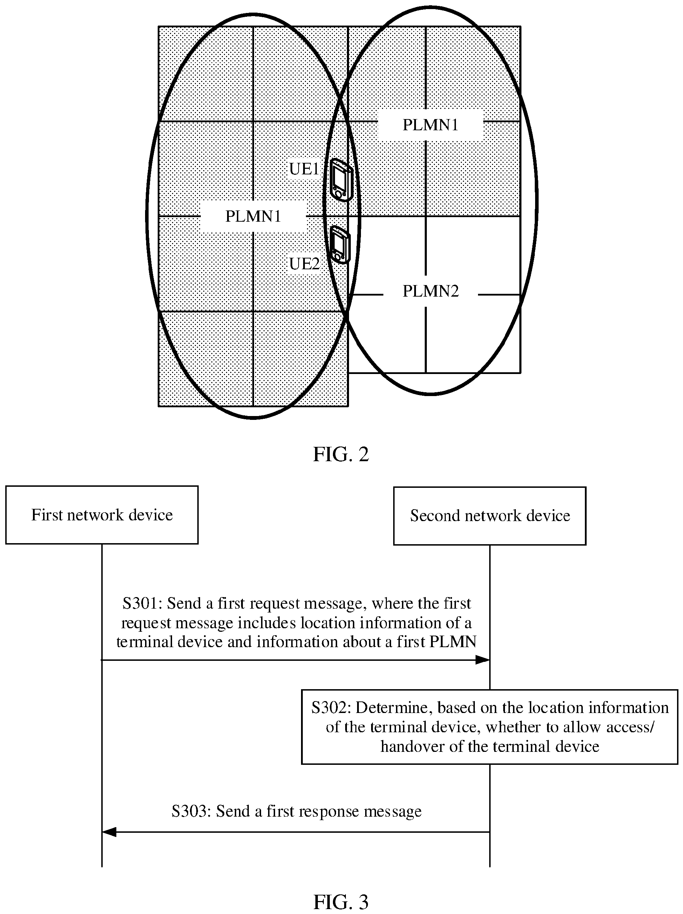

It is considered that communication policies of different countries, operators, network service providers, or service types are different, and satellite cells may be divided into areas at finer granularities. For example, an entire service coverage area of a satellite cell is divided into a plurality of regular or irregular areas, which may be referred to as virtual cells or virtual areas, to better fit geographic areas of different countries, service areas of different operators, service areas of different network service providers, or service areas of different service types. As shown in FIG. 2, different areas in a same satellite cell may correspond to different PLMNs, so that a plurality of logical cells are formed in a same satellite cell, and mobility of a terminal device can be effectively managed based on different areas. With reference to the foregoing example, from the perspective of communication management, an access network device and/or a core network device reject/rejects access of UE1 from a PLMN2, and rejects access of UE2 from a PLMN1. It may be understood that, there may be a partial overlapping area between virtual cells or virtual areas; or the virtual cells or virtual areas may be completely isolated, meaning that there is no overlapping area between the virtual cells or virtual areas.

Embodiments of this application may further be applied to a cell handover scenario. A terminal device may hand over from a source network device to a target network device due to mobility, changes of services, changes of network coverage, or other factors. The source network device is a network device accessed by the terminal device before handover or a network device that provides a service for the terminal device before handover. The target network device is a network device to which the terminal device needs to hand over, a network device accessed by the terminal device after successful handover, or a network device that provides a service for the terminal device after successful handover. Correspondingly, a source cell is a cell accessed by the terminal device before handover. The source cell is a cell covered by the source network device, a cell managed by the source network device, or a cell belonging to the source network device. A target cell is a cell accessed by the terminal device after handover. The target cell is a cell covered by the target network device, a cell managed by the target network device, or a cell belonging to the target network device.

It may be understood that a source cell and/or a target cell in embodiments of this application may be an NTN cell described above, for example, a satellite cell, or may be another cell covering different countries/operators/network service providers/service types. In other words, a service coverage area of a source cell and/or a target cell may be divided into a plurality of areas, and different areas may correspond to different PLMNs and/or AMFs, to form different logical cells.

The following explains and describes some terms in embodiments of this application, to help a person skilled in the art have a better understanding.
(1) A terminal device in embodiments of this application is a device having a wireless transceiver function, and may be deployed on land, including an indoor, outdoor, handheld, wearable, or vehicle-mounted device; or may be deployed on a water surface (for example, on a ship); or may be deployed in the air (for example, on a plane, a balloon, or a satellite). The terminal device may communicate with a core network through a radio access network (radio access network, RAN), and exchange voice and/or data with the RAN. The terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, and the like. A specific technology, a device form, and a name that are used by the terminal device are not limited in embodiments of this application.

By way of example rather than limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal device in embodiments of this application may alternatively be a vehicle-mounted module, a vehicle-mounted module assembly, a vehicle-mounted component, a vehicle-mounted chip, or a vehicle-mounted unit with which a vehicle is equipped as one or more components or units. The vehicle may use the vehicle-mounted module, the vehicle-mounted module assembly, the vehicle-mounted component, the vehicle-mounted chip, or the vehicle-mounted unit with which the vehicle is equipped to implement the method in this application.

(2) A radio access network device in embodiments of this application is a device that is in a network and that enables a terminal device to access a wireless network. The radio access network device may be a node in a radio access network, which may also be referred to as a base station, or may be referred to as a RAN node. In this application, the radio access network device is a radio access network device deployed on the ground. In the following descriptions, the radio access network device may be referred to as an access network device or a network device for short.

The access network device may include an evolved NodeB (NodeB, eNB, or e-NodeB, evolved NodeB) in an LTE system or an LTE-advanced system (LTE-Advanced, LTE-A), for example, a conventional macro base station eNB and a micro base station eNB in a heterogeneous network scenario, or may include a next generation nodeB (next generation nodeB, gNB) in a 5G system or an NR system, or may include a radio network controller (radio network controller, RNC), a nodeB (NodeB, NB), a base station controller (base station controller, BSC), a base transceiver station (base transceiver station, BTS), a transmission reception point (transmission reception point, TRP), a home NodeB (for example, a home evolved NodeB, a home NodeB, HNB), a baseband unit (baseband unit, BBU), a baseband pool BBU pool, a wireless fidelity (wireless fidelity, Wi-Fi) access point (access point, AP), an integrated access and backhaul (integrated access and backhaul, IAB) node, or the like, or may include a central unit (central unit, CU) and/or a distributed unit (distributed unit, DU) in a cloud access network (cloud radio access network, CloudRAN) system. This is not limited in embodiments of this application.

For example, in a network structure, the network device may be a CU node, a DU node, or an access network device including a CU node and a DU node. Further, the CU node may be divided into a control plane (CU-CP) and a user plane (CU-UP). The CU-CP is responsible for control plane functions, and mainly includes radio resource control (radio resource control, RRC) and packet data convergence protocol (packet data convergence protocol, PDCP)-C. The PDCP-C is mainly responsible for control plane functions such as data encryption and decryption, integrity protection, and data transmission. The CU-UP is responsible for user plane functions, and mainly includes a service data adaptation protocol (service data adaptation protocol, SDAP) and PDCP-U. The SDAP is mainly responsible for processing data of a core network and mapping flows (flows) to bearers (bearers). The PDCP-U is mainly responsible for data plane functions such as data encryption and decryption, integrity protection, header compression, serial number maintenance, and data transmission. The CU-CP is connected to the CU-UP through an E1 interface. The CU-CP means that the CU is connected to the core network through an Ng interface, and connected to the DU through an F1-C (the control plane). The CU-UP is connected to the DU through an F1-U (the user plane). Certainly, in another possible implementation, the PDCP-C is implemented on the CU-UP.

(3) A core network device in embodiments of this application is a device in a core network (core network, CN) that provides service support for a terminal device. Currently, examples of some core network devices include an AMF entity, a session management function (session management function, SMF) entity, a user plane function (user plane function, UPF) entity, and the like. The AMF entity is responsible for access management and mobility management of the terminal device. The SMF entity is responsible for session management, for example, user session establishment. The UPF entity is a user plane functional entity, and is mainly responsible for connecting to an external network. It should be noted that an entity in this application may also be referred to as a network element or a functional entity. In other words, the AMF entity may also be referred to as an AMF network element or an AMF functional entity, and the SMF entity may also be referred to as an SMF network element or an SMF functional entity. In the following descriptions of this application, the core network device may be an AMF.

(4) A satellite in embodiments of this application is a network device carried on a satellite. For ease of description, "the network device on the satellite" may be referred to as a "satellite" for short. The satellite may be a low-earth orbit (low-earth orbit, LEO) satellite, a medium-earth orbit satellite, or another network device moving at high altitude. Generally, based on satellite orbit altitudes, there are the following three types of satellites in a satellite communication system: a geostationary earth orbit (geostationary earth orbit, GEO) satellite, a low-earth orbit (LEO) satellite, and a medium-earth orbit satellite. The geostationary earth orbit satellite may also be referred to as a stationary satellite. The geostationary earth orbit satellite moves at a same speed as Earth's rotation, and thus appears motionless to ground observers. Correspondingly, a satellite cell formed by the geostationary earth orbit satellite is also stationary. The low-earth orbit satellite may also be referred to as a near-earth orbit satellite. The low-earth orbit satellite moves fast relative to the ground. Therefore, a satellite cell formed by the low-earth orbit satellite may move accordingly as the satellite moves. The medium-earth orbit satellite is a satellite located at a satellite orbit height between a satellite orbit height of the geostationary earth orbit satellite and a satellite orbit height of the low-earth orbit satellite.

(5) It should be noted that the terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

It may be understood that, in embodiments of this application, the terminal device and/or the network device may perform some or all steps in embodiments of this application. These steps or operations are merely examples. In embodiments of this application, other operations or variations of various operations may further be performed. In addition, the steps may be performed in a sequence different from a sequence presented in embodiments of this application, and not all the operations in embodiments of this application may be performed.

In embodiments of this application, a PLMN and an AMF entity are used as an example to describe the related method. However, the present invention is not limited to the PLMN and the AMF entity. The PLMN may alternatively be another communication network or a device that implements some functions of a communication network. The AMF entity may alternatively be another entity or device capable of implementing a mobility management function, or an entity or device that implements a similar function in a communication network.

FIG. 3 is a schematic flowchart of a communication method according to an embodiment of this application. The method includes the following steps.

Step S301: A first network device sends a first request message to a second network device. The first request message is used to request to access a terminal device to a second cell of the second network device. The first request message includes location information of the terminal device and information about a first PLMN. The first PLMN is a target PLMN that is determined by the first network device and that is accessed by the terminal device.

Optionally, the first request message may further include mobility restriction information of the terminal device. The mobility restriction information may include information about a country/an operator/a network service provider/a service type that the terminal device is allowed to access. For example, the mobility restriction information may indicate information about a PLMN that the terminal device is allowed to access.

Correspondingly, the second network device receives the first request message from the first network device.

In this embodiment of this application, the first network device may be a source network device, and the second network device may be a target network device. A first cell may be a source cell, and is managed by the first network device. In other words, the first cell is a cell of the first network device or the first cell belongs to the first network device. The second cell may be a target cell, and is managed by the second network device. In other words, the second cell is a cell of the second network device, or the second cell belongs to the second network device. The first cell and the second cell may be neighboring cells, and the first cell and the second cell may be NTN cells.

The location information of the terminal device may include one or more of the following: longitude information, latitude information, and height information, or may be location information in another form. This is not limited in this application. In a possible implementation, the location information describes a specific location, for example, longitude, latitude, and height information of a current location of the terminal device. In another possible implementation, the location information may alternatively describe a rough area range, that is, an area range in which the terminal device is currently located. For example, the area range may be represented by using longitude, latitude, and a height of a central point together with a parameter such as a diameter or a radius of the area range. In still another possible implementation, the location information or area information may be represented by using an identifier. For example, the identifier may be an index or an ID. A mapping relationship between the identifier and the location information or area information may be agreed on in a protocol, or may be sent by a network device/core network device to the terminal device. In other words, the terminal device, the network device, or the core network device may determine a corresponding location or area based on the identifier. Certainly, the descriptions of the area range may alternatively be in another representation form. Examples are not provided one by one in this application.

Further, the location information of the terminal device may be received by the first network device from the terminal device. For example, the first network device may receive a measurement report reported by the terminal device. The measurement report may include location information of the terminal device that is measured by the terminal device. Alternatively, the location information of the terminal device may be received by the first network device from another network device. For example, the first network device may receive location information of the terminal device from the core network device. Alternatively, the location information of the terminal device may be determined by the first network device. For example, the first network device may position the terminal device, to obtain location information of the terminal device. The location information of the terminal device may be obtained by the first network device in another manner. This is not limited in this application.

The information about the first PLMN may include identification information of the first PLMN, for example, an ID of the first PLMN (namely, PLMN-identifier). Similarly, information about a second PLMN described below may include identification information of the second PLMN, for example, an ID of the second PLMN (namely, PLMN-identifier). It may be understood that, in this embodiment of this application, a PLMN is used as an example. Extensively, a country/an operator/a network service provider/a service type may also be used as an example. This is not limited in this application.

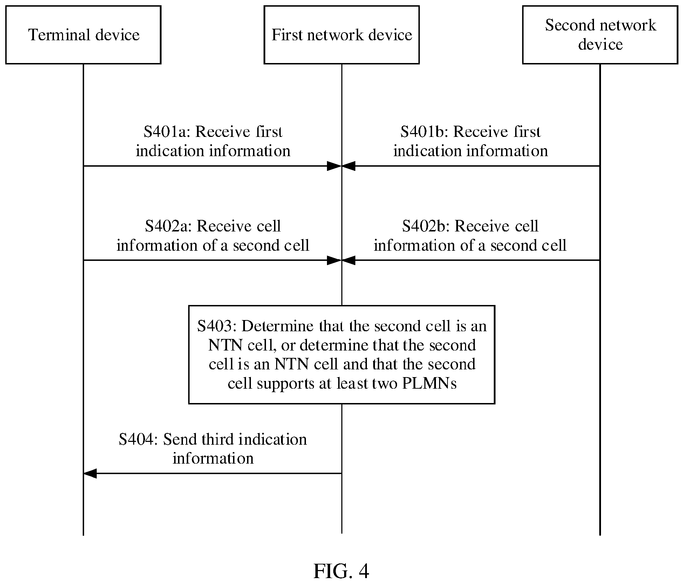

Optionally, before sending the first request message to the second network device, as shown in FIG. 4, the first network device may determine that the second cell is an NTN cell, determine that the second cell is an NTN cell and that the second cell supports at least two PLMNs, or determine that the second cell supports at least two PLMNs and that there is a correspondence between an area and a PLMN.

In a possible implementation, as shown in step S401a and step S401b, the first network device may receive first indication information from the terminal device or the second network device. The first indication information indicates that the second cell is an NTN cell, indicates that the second cell is an NTN cell and that the second cell supports at least two PLMNs, or indicates that the second cell supports at least two PLMNs and there is a correspondence between an area and a PLMN. It may be understood that, that the second cell supports at least two PLMNs means that a quantity of PLMNs supported by the second cell is greater than or equal to two, or that the second cell supports a plurality of PLMNs. In this way, in the foregoing manner, the first network device may learn that the second cell of the second network device is an NTN cell and that the second cell supports at least two PLMNs. It may be understood that, that there is a correspondence between an area and a PLMN in the second cell may mean that terminal devices in different areas in the second cell need to access or hand over to the second cell from a corresponding PLMN. It may be understood that, in this embodiment of this application, an NTN cell is used as an example. Extensively, a cell that supports a plurality of countries/operators/network service providers/service types may also be used as an example. This is not limited in this application.

For example, the terminal device may learn, by reading a system message of the second cell, that the second cell is an NTN cell, learn that the second cell is an NTN cell and that the second cell supports at least two PLMNs, or learn that the second cell supports at least two PLMNs and there is a correspondence between an area and a PLMN. Further, the terminal device may send the first indication information to the first network device.

In another possible implementation, as shown in step S402a and step 402b, the first network device may receive cell information of the second cell from the terminal device or the second network device. The cell information of the second cell may include information about the at least two PLMNs supported by the second cell. Optionally, the cell information of the second cell may further indicate that the second cell is an NTN cell, or may indicate that there is a correspondence between an area and a PLMN in the second cell. In this way, the first network device determines, based on the cell information of the second cell from the at least two PLMNs supported by the second cell, the first PLMN accessed by the terminal device, to ensure that the first PLMN carried in the first request message is a PLMN supported by the second network device.

Optionally, after determining that the second cell is an NTN cell, determining that the second cell is an NTN cell and that the second cell supports at least two PLMNs, or determining that the second cell supports at least two PLMNs and that there is a correspondence between an area and a PLMN, as shown in step S404 in FIG. 4, the first network device may send third indication information to the terminal device. The third indication information indicates the terminal device to include the location information of the terminal device when reporting a measurement result of the second cell. Subsequently, the terminal device may send a measurement report to the first network device. The measurement report includes the measurement result of the second cell and the location information of the terminal device. Optionally, the third indication information may be included in location measurement configuration information sent by the first network device to the terminal device. The location measurement configuration information indicates the terminal device to perform location measurement. In this way, the terminal device may perform location measurement based on the received location measurement configuration information. When reporting the measurement result of the second cell, the terminal device sends, based on an indication of the third indication information, the measured location information of the terminal device to the first network device via the measurement report.

It should be noted that FIG. 4 is merely an example. A sequence of receiving the first indication information and receiving the cell information of the second cell by the first network device is not limited in this embodiment of this application. In addition, when the first network device receives the first indication information from the terminal device, the first network device may still receive the cell information of the second cell from the terminal device, or may receive the cell information of the second cell from the second network device. This is not limited. Similarly, when the first network device receives the first indication information from the second network device, the first network device may still receive the cell information of the second cell from the second network device, or may receive the cell information of the second cell from the terminal device. This is not limited.

The at least two PLMNs supported by the second cell include the first PLMN and the second PLMN. Correspondingly, the second cell covers at least a first area corresponding to the first PLMN and a second area corresponding to the second PLMN. The second cell supports at least two PLMNs. Therefore, when the second cell supports two PLMNs, the first PLMN and the second PLMN are all PLMNs supported by the second cell. When the second cell supports more than two PLMNs, the first PLMN and the second PLMN are two PLMNs of all PLMNs supported by the second cell. In other words, the second cell may support another PLMN in addition to the first PLMN and the second PLMN. This is not limited in this application.

Step S302: The second network device determines, based on the location information of the terminal device, whether to allow access/handover of the terminal device.

Specifically, the second network device determines, based on the location information of the terminal device, whether the terminal device is located within the first area corresponding to the first PLMN. If determining that the terminal device is located within the first area corresponding to the first PLMN, the second network device may accept an access/handover request of the terminal device. Optionally, the second network device may also reject the access/handover request of the terminal device. For example, the second network device further determines, based on another handover decision factor (for example, load of the second cell is high), to reject the access/handover request of the terminal device.

If determining that the terminal device is located outside the first area corresponding to the first PLMN, and is located within the second area corresponding to the second PLMN, the second network device may reject the access/handover request of the terminal device. Further, the second network device may determine, based on the mobility restriction information of the terminal device, whether the terminal device supports the second PLMN. If the terminal device supports the second PLMN, the second network device determines the second PLMN as a target PLMN that the terminal device is allowed to access. Both the first PLMN and the second PLMN are PLMNs supported by the second network device.

Step S303: The second network device sends a first response message to the first network device. Correspondingly, the first network device may receive the first response message from the second network device.

Optionally, the first response message includes information about the second PLMN. The second PLMN is a target PLMN that the second network device allows the terminal device to access. In other words, the second network device may include, in the first response message, information about the target PLMN that the terminal device is allowed to access. When a location of the terminal device is within the second area corresponding to the second PLMN, and the terminal device supports the second PLMN, the second network device may determine that the second PLMN is a target PLMN that the terminal device is allowed to access. The second PLMN, matching the location of the terminal device, is a PLMN corresponding to an area to which the current location of the terminal device belongs. In this way, the first network device may re-initiate a handover request based on the second PLMN, so that the terminal device accesses the second cell from the second PLMN corresponding to the area to which the location of the terminal device belongs. Therefore, a handover success rate is effectively improved.

Optionally, the first response message may further include second indication information indicating that the location of the terminal device does not match the first PLMN that the terminal device requests to access. That the location of the terminal device does not match the first PLMN that the terminal device requests to access may mean that the location of the terminal device is not within a range of the first area corresponding to the first PLMN that the terminal device requests to access. In this way, after receiving the second indication information, the first network device may determine that the second network device rejects access of the terminal device to the second cell because the location of the terminal device does not match the previously determined first PLMN to be accessed. The second indication information may indicate a handover failure cause. The second indication information may alternatively be expressed in another manner, for example, indicate that a requested PLMN is invalid or incorrect.

It may be learned that, in this embodiment of this application, the first network device may receive the cell information of the second cell from the terminal device or the second network device, and determine, based on the cell information of the second cell, a PLMN that the terminal device requests to access, so that the PLMN that the terminal device accesses is definitely a PLMN supported by the second network device. Therefore, this avoids another case resulting from a handover failure caused because the second network device does not support a PLMN that the terminal device accesses.

It should be noted that the first response message may include the information about the target PLMN and/or the second indication information. To be specific, neither the information about the target PLMN nor the second indication information is mandatory information in the first response message. The first response message may include either or both of the information about the target PLMN and the second indication information, and the two types of information both have a function of indicating a handover failure.

Optionally, if the location of the terminal device is within the first area corresponding to the first PLMN that the terminal device requests to access, the second network device may allow the terminal device to access the second cell from the first PLMN. In this case, the first response message may also be referred to as a handover request acknowledgment message, a handover command message, or a reconfiguration message, or may have another name. This is not limited in this application.

In this embodiment of this application, the first network device may include the location information of the terminal device in the first request message. The second network device performs handover/access decision based on the location information of the terminal device in the first request message, to determine whether to allow the terminal device to access/hand over to the second cell. When the terminal device requests to access the first PLMN, and the location of the terminal device is located outside the first area corresponding to the first PLMN, the second network device may determine that a PLMN requested by the terminal device is incorrect, or the location of the terminal device does not match the PLMN that the terminal device requests to access, and need to reject the handover request of the terminal device, in other words, the terminal device is not allowed to hand over/access from the first PLMN to the second cell. In this case, the first response message may also be referred to as a handover failure message.

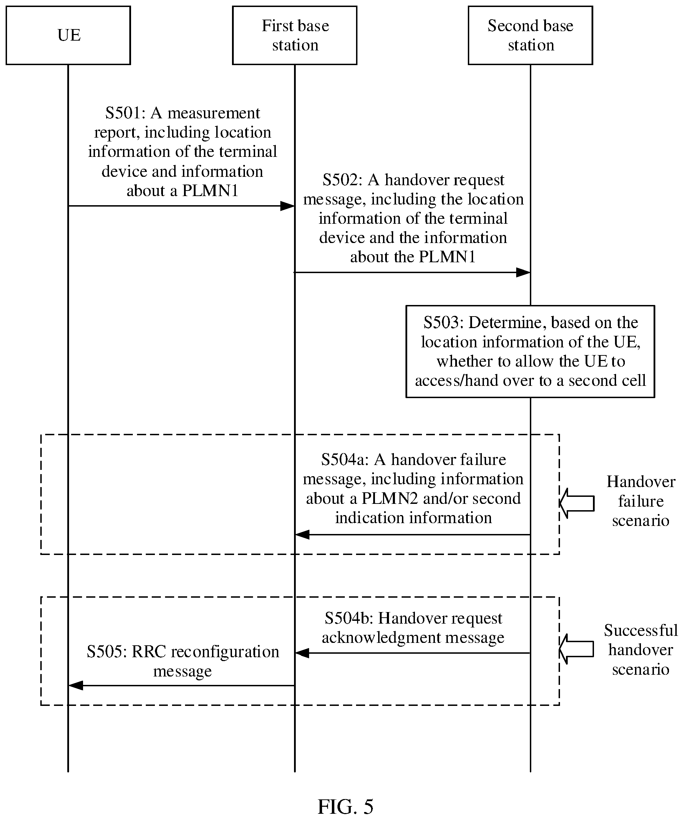

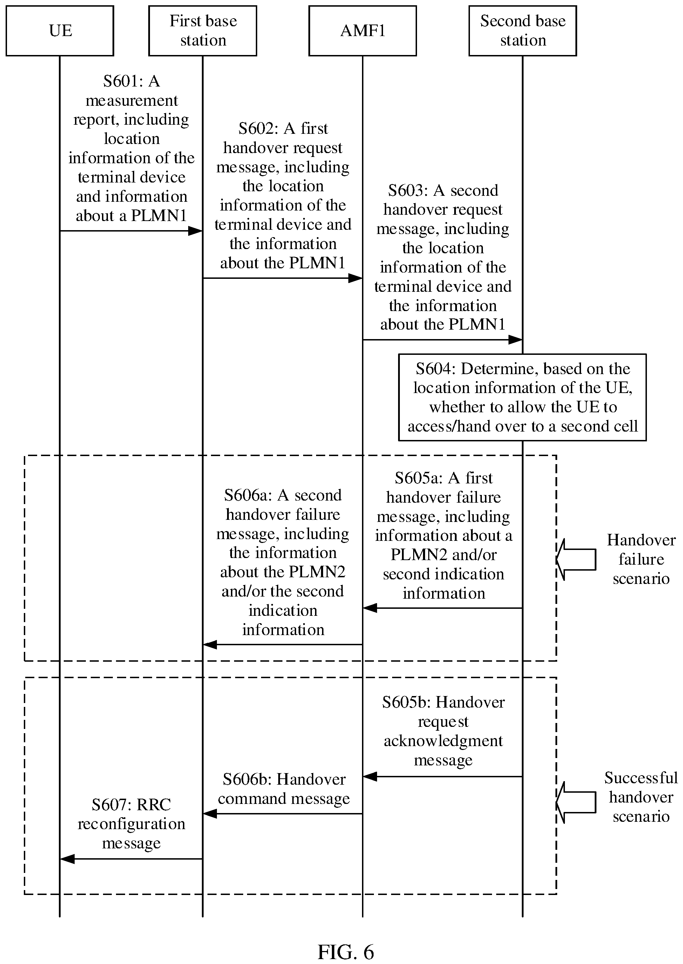

FIG. 5 and FIG. 6 are two specific examples of a handover process in a communication method according to an embodiment of this application. A specific example shown in FIG. 5 corresponds to a scenario in which there is a directly connected interface between a first network device and a second network device. The first network device and the second network device may perform a handover process based on the directly connected interface. The directly connected interface may be, for example, an Xn interface. In this case, the handover process may also be referred to as an Xn interface-based handover (Xn based HO) or an Xn handover process. The solution shown in FIG. 5 is also applicable to a case in which a directly connected interface is an X2 interface. This is not limited in this application. A specific example shown in FIG. 6 corresponds to a scenario in which there is no directly connected interface between a first network device and a second network device. The first network device and the second network device may perform a handover process based on an interface between an access network device and a core network device. The core network device may be, for example, an AMF. The interface between the access network device and the core network device may be, for example, an NG interface. In this case, the handover process may also be referred to as an NG interface-based handover (NG based HO) or an NG handover process. The solution shown in FIG. 6 is also applicable to a case in which an interface between an access network device and a core network device is an S1 interface (correspondingly, the core network device may be a mobility management entity (mobility management entity, MME) in this case). This is not limited in this application.

As shown in FIG. 5, in step S501, UE may send a measurement report to a first base station. Optionally, the measurement report includes location information of the UE.

In step S502, the first base station may send a handover request message to a second base station. The handover request message includes the location information of the UE and information about a PLMN1 that is determined by the first base station and that is accessed by the UE. It should be noted that the location information of the UE included in the handover request message may be obtained by the first base station from the measurement report reported by the UE, or may be obtained by the first base station in another manner, for example, obtained by positioning the UE, or obtained from another network device. This is not limited. The PLMN1 is a PLMN supported by the second base station. The PLMN1 may be determined by the first base station based on cell information of a second cell of the second base station, or may be determined by the first base station based on cell information of a second cell in combination with mobility restriction information and/or subscription information of the UE. Optionally, the handover request message may further include the mobility restriction information of the UE. For the cell information and the mobility restriction information, refer to the related descriptions in step S301 above. Details are not described herein again.

Further, in step S503, after receiving the handover request message, the second base station may determine, based on the location information of the UE, whether to allow the UE to access/hand over to the second cell.

Specifically, in step S504a, if the location of the UE is located outside a first area covered by the second cell, and the first area corresponds to the PLMN1 to be accessed by the UE, the second base station may determine a handover failure, and need to reject a handover request of the UE, in other words, reject access of the UE from the PLMN1 to the second cell. Correspondingly, the second base station may send a handover failure message to the first base station in step S504a, and include second indication information in the handover failure message. The second indication information indicates that the location of the UE does not match a first PLMN, in other words, indicates a handover failure cause.

Alternatively, if the second base station determines that the terminal device is located outside a first area corresponding to the PLMN1, and is located within a second area corresponding to a PLMN2, the second network device may determine, based on the mobility restriction information of the terminal device, whether the terminal device supports the PLMN2. If the terminal device supports the PLMN2, the second base station may send a handover failure message to the first base station in step S504a, and include information about the PLMN2 and/or second indication information in the handover failure message. The PLMN2 is a target PLMN that is determined by the second base station and that the UE is allowed to access. The PLMN2 is a PLMN corresponding to the second area to which the location of the UE belongs.

In this way, for the UE, the first base station may subsequently re-initiate a handover request for accessing a second PLMN, so that the UE successfully hands over to the second cell. The handover failure message may also be referred to as a handover preparation failure message, or has another name. This is not limited.

In step S503, if the location of the UE is located within a first area covered by the second cell, and the first area corresponds to the PLMN1 to be accessed by the UE, the second base station may accept a handover request of the UE, and determine to allow the UE to access the second cell from the PLMN1. Therefore, the second base station may send a handover request acknowledgment message to the first base station in step S504b, and subsequently, in step S505, the first base station may further send an RRC reconfiguration message to the UE.

As shown in FIG. 6, in step S601, UE may send a measurement report to a first base station. Optionally, the measurement report includes location information of the UE.

In step S602, the first base station may send a first handover request message to an AMF1. The first handover request message may include the location information of the UE and information about a PLMN1 that is determined by the first base station and that is to be accessed by the UE. The first handover request message may be an HO required message or another message. This is not limited. The location information of the UE included in the first handover request message may be obtained by a source base station from the measurement report reported by the UE, or may be obtained by a source base station in another manner. This is not limited. The PLMN1 is a PLMN supported by a second base station. The PLMN1 may be determined by the first base station based on cell information of a second cell of the second base station, or may be determined by the first base station based on cell information of a second cell in combination with mobility restriction information and/or subscription information of the UE. Optionally, the handover request message may further include the mobility restriction information of the UE. For the cell information and the mobility restriction information, refer to the related descriptions in step S301 above. Details are not described herein again.

In another possible implementation, step S602 may be replaced with step S602'. The first base station may send a first handover request message to an AMF1. The first handover request message may include indication information that indicates the AMF1 to provide the location information of the UE, and information about a PLMN1 that is determined by the first base station and that is to be accessed by the UE. The AMF1 may obtain the location information of the UE based on the indication information that indicates the AMF1 to provide the location information of the UE, and include the location information of the UE in a second handover request message in step S603. That the AMF1 obtains the location information of the UE may be that the AMF1 receives the location information that is reported by the UE, the AMF1 obtains the location information of the UE by using a location server of the UE, or the AMF1 obtains the location information of the UE in another manner. This is not limited. Optionally, the first handover request message may further include the mobility restriction information of the terminal device.

Further, in step S603, the AMF1 may send the second handover request message to the second base station. The second handover request message may include the location information of the UE and the information about the PLMN1 that is determined by the first base station and that is to be accessed by the UE. The second handover request message may be an HO request message or another message. This is not limited. It should be noted that, the location information of the UE included in the second handover request message is obtained by the AMF1 from the first handover request message, or may be obtained by the AMF1 in another manner, for example, obtained by positioning the UE, or obtained from another network device. This is not limited. Optionally, the second handover request message may further include the mobility restriction information of the terminal device.

Further, in step S604, after receiving the second handover request message, the second base station may determine, based on the location information of the UE, whether to allow the UE to access/hand over to the second cell.

Specifically, in step S604a, if the location of the UE is located outside a first area covered by the second cell, and the first area corresponds to the PLMN1 to be accessed by the UE, the second base station may determine a handover failure, and need to reject a handover request of the UE, in other words, reject access of the UE from the PLMN1 to the second cell. Correspondingly, the second base station may send a first handover failure message to the AMF1 in step S605a, and include second indication information in the first handover failure message. The second indication information indicates that the location of the UE does not match a first PLMN, in other words, indicates a handover failure cause.

Alternatively, if the second base station determines that the terminal device is located outside a first area corresponding to the PLMN1, and is located within a second area corresponding to a PLMN2, the second network device may determine, based on the mobility restriction information of the UE, whether the terminal device supports the PLMN2. If the terminal device supports the PLMN2, the second base station may send a first handover failure message to the AMF1 in step S605a, and include information about the PLMN2 and/or second indication information in the first handover failure message. The PLMN2 is a target PLMN that is determined by the second base station and that the UE is allowed to access. The PLMN2 is a PLMN corresponding to an area to which the location of the UE belongs.

Subsequently, in step S606a, the AMF1 may send a second handover failure message to the first base station, and include the information about the PLMN2 and/or the second indication information in the second handover failure message. The second handover failure message may be a handover preparation failure message or another message. This is not limited. Correspondingly, the first base station receives the second handover failure message.

In this way, for the UE, the first base station may re-initiate a handover request for requesting to access a second PLMN, so that the UE successfully hands over to the second cell. The second handover failure message may also be referred to as a handover preparation failure message, or has another name. This is not limited.

In step S604, if the location of the UE is located within a first area covered by the second cell, and the first area corresponds to the PLMN1 to be accessed by the UE, the second base station may accept a handover request of the UE, and determine to allow the UE to access the second cell from the PLMN1. Therefore, the second base station may send a handover request acknowledgment message to the AMF1 in step S605b. Further, in step S606b, the AMF1 may send a handover command message to the first base station. Subsequently, in step S607, the first base station may further send an RRC reconfiguration message to the UE.

It should be noted that the specific example shown in FIG. 6 is described by using an example in which the first base station and the second base station belong to a same AMF, namely, the AMF1 shown in the figure. It may be understood that the first base station and the second base station may alternatively belong to different AMFs. In this case, a handover procedure may further include an inter-AMF handover procedure, and a message exchanged between AMFs for handover also includes one or more of information such as location information of a UE, information about a target PLMN that the UE is allowed to access, and second indication information. Details are not described herein.

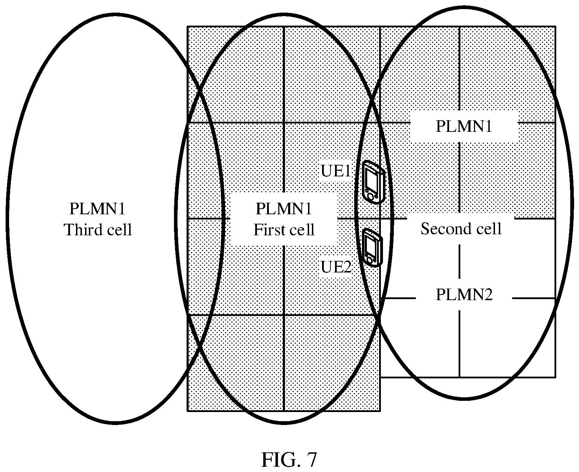

As described above, a second cell is a neighboring cell of a first cell. In embodiments of this application, the first cell may further have another neighboring cell. For example, as shown in FIG. 7, a first cell has two neighboring cells: a second cell and a third cell, and the first cell, the second cell, and the third cell are all NTN cells.

The first cell is a cell of a first network device. The first cell supports only a PLMN1. In other words, the first cell supports one PLMN. It should be noted that a quantity of PLMNs supported by the first cell is not specifically limited in this embodiment of this application. This is merely an example herein. The second cell is a cell of a second network device. The second cell supports a PLMN1 and a PLMN2. The PLMN1 corresponds to a first area, and the PLMN2 corresponds to a second area. To be specific, the second cell supports two PLMNs, and the second cell covers the first area corresponding to the PLMN1 and the second area corresponding to the PLMN2. The third cell is a cell of a third network device. The third cell supports only a PLMN1. In other words, the third cell supports one PLMN.

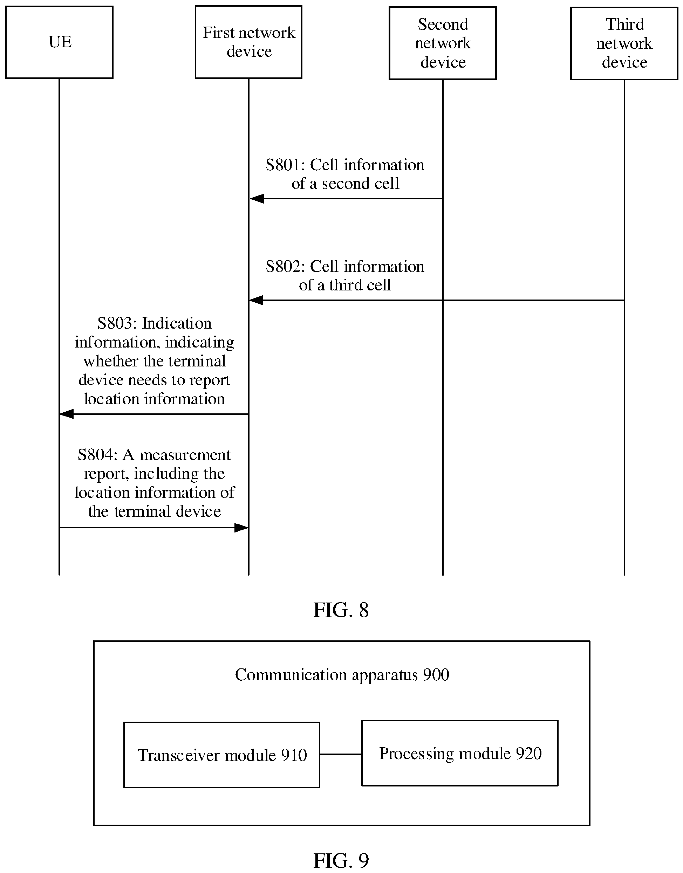

Based on the foregoing neighboring cell relationships of the first cell, as shown in FIG. 8, a first network device may separately exchange cell information of respective cells with a second network device and a third network device, and send indication information to a terminal device based on a status of a PLMN supported by each neighboring cell of the first cell, to indicate whether the terminal device needs to report location information of the terminal device.

Specifically, in step S801, the first network device may receive cell information of a second cell from the second network device. The cell information of the second cell includes information about a PLMN (for example, information about a first PLMN and information about a second PLMN) supported by the second cell. Optionally, the cell information of the second cell may further include at least one of information such as identification information, frequency information, and a physical cell identifier (physical cell identifier, PCI) that are of the second cell. Optionally, the cell information of the second cell may further indicate that the second cell is an NTN cell, or may indicate that there is a correspondence between an area and a PLMN in the second cell. In this way, the first network device may determine, based on the cell information of the second cell, that the second cell supports a plurality of PLMNs.

Optionally, the first network device may alternatively send cell information of the first cell to the second network device. Details are not described again.

In step S802, the first network device may receive cell information of a third cell from the third network device. The cell information of the third cell includes information about a PLMN (for example, the information about the first PLMN) supported by the third cell. Optionally, the cell information of the third cell may further include information such as identifier information, frequency information, and a PCI that are of the third cell. In this way, the first network device may determine, based on the cell information of the third cell, that the third cell supports one PLMN.

Optionally, the first network device may alternatively send the cell information of the first cell to the third network device. Details are not described again.

It may be learned that because the second cell supports a plurality of PLMNs, and the third cell supports one PLMN, when determining to hand over the terminal device to the second cell, the first network device needs to determine, based on the location information of the terminal device, information about a target PLMN during handover. In an example in which the first network device obtains a location of the terminal device by using the location information sent by the terminal device, when a measurement report of the terminal device includes a measurement result of the second cell, the terminal device needs to report the location information of the terminal device, so that a target network device determines, based on the location information of the terminal device, whether access of the terminal device is appropriate, for example, determines whether the location of the terminal device matches a PLMN requested by the terminal device. When a measurement report of the terminal device includes only a measurement result of the third cell, the terminal device does not need to report the location information of the terminal device.

In view of this, in step S803, the first network device may send indication information to the terminal device. The indication information indicates whether the terminal device needs to report the location information. In other words, the indication information indicates whether the terminal device needs to report the location information when reporting the measurement report, or indicates a condition for reporting the location information in the measurement report of the terminal device. The condition for reporting the location information may be, for example, that the terminal device needs to report the location information of the terminal device when the measurement report includes a measurement result of a specific cell. The cell may be identified by using frequency information of the cell, or frequency information and a PCI that are of the cell. Optionally, the indication information may be included in measurement configuration information or location measurement configuration information sent by the first network device to the terminal device. The location measurement configuration information indicates the terminal device to perform location measurement.

In step S804, after receiving the indication information, the terminal device may determine whether to report the location information of the terminal device, and send the measurement report to the first network device.

It should be noted that the indication information may be configured based on a cell (per cell). For example, third indication information may correspond to the second cell, and fourth indication information may correspond to the third cell. The first network device may indicate, by using the third indication information, that the location information needs to be reported when the measurement result of the second cell is reported. For example, the third indication information in combination with the frequency information and the PCI that are of the second cell is sent to the terminal device. The first network device may indicate, by using the fourth indication information, that the location information of the terminal device does not need to be reported when the measurement result of the third cell is reported. In this way, the terminal device may determine, based on a measurement result of a cell that needs to be reported in the measurement report, the third indication information, and the fourth indication information, that the location information needs to be reported when the measurement report includes the measurement result of the second cell, and that the location information does not need to be reported when the measurement report includes only the measurement result of the third cell.

An embodiment of this application further provides a communication apparatus. FIG. 9 is a schematic diagram of a structure of a communication apparatus according to an embodiment of this application. The communication apparatus 900 includes a transceiver module 910 and a processing module 920. The communication apparatus may be configured to implement functions of a network device (for example, the first network device or the second network device) according to any one of the foregoing method embodiments. For example, the communication apparatus may be a network device or a chip or a circuit included in a network device.

For example, when the communication apparatus performs an operation or a step corresponding to the first network device in the method embodiment shown in FIG. 3, the processing module 920 is configured to generate a first request message. The first request message is used to request to access a terminal device to a second cell of a second network device, the first request message includes location information of the terminal device and information about a first PLMN, and the first PLMN is a target PLMN that is determined by the first network device and that is accessed by the terminal device. The transceiver module 910 is configured to: send the first request message to the second network device, and receive a first response message from the second network device. The first response message includes information about a second PLMN, and the second PLMN is a target PLMN that the second network device allows the terminal device to access. A location of the terminal device is located outside a first area corresponding to the first PLMN, and is located within a second area corresponding to the second PLMN, and both the first PLMN and the second PLMN are PLMNs supported by the second network device.

In a possible design, the transceiver module 910 is further configured to receive first indication information from the terminal device or the second network device. The first indication information indicates that the second cell is an NTN cell, or indicates that the second cell is an NTN cell and that the second cell supports at least two PLMNs.

In a possible design, the transceiver module 910 is further configured to receive cell information of the second cell from the terminal device or the second network device. The cell information of the second cell includes information about the at least two PLMNs supported by the second cell, and the at least two PLMNs include the first PLMN and the second PLMN.

In a possible design, the first response message further includes second indication information indicating that the location of the terminal device does not match the first PLMN that the terminal device requests to access.

In a possible design, the transceiver module 910 is further configured to send third indication information to the terminal device. The third indication information indicates the terminal device to include the location information of the terminal device when reporting a measurement result of the second cell.

In a possible design, the transceiver module 910 is specifically configured to: send the first request message to the second network device via a core network device; and receive, from the core network device, the first response message from the second network device.

When the communication apparatus performs an operation or a step corresponding to the second network device in the method embodiment shown in FIG. 3, the transceiver module 910 is configured to receive a first request message from a first network device. The first request message is used to request to access a terminal device to a second cell of the second network device. The first request message includes location information of the terminal device and information about a first PLMN, and the first PLMN is a target PLMN that is determined by the first network device and that is accessed by the terminal device. The processing module 920 is configured to: if a location of the terminal device is located outside a first area corresponding to the first PLMN, and is located within a second area corresponding to a second PLMN, determine the second PLMN as a target PLMN that the terminal device is allowed to access. Both the first PLMN and the second PLMN are PLMNs supported by the second network device. The transceiver module 910 is further configured to send a first response message to the first network device. The first response message includes information about the second PLMN.

In a possible design, the transceiver module 910 is further configured to send first indication information to the first network device. The first indication information indicates that the second cell is an NTN cell, or indicates that the second cell is an NTN cell and that the second cell supports at least two PLMNs.

In a possible design, the transceiver module 910 is further configured to send cell information of the second cell to the first network device. The cell information of the second cell includes information about the at least two PLMNs supported by the second cell, and the at least two PLMNs include the first PLMN and the second PLMN.

In a possible design, the first response message further includes second indication information indicating that the location of the terminal device does not match the first PLMN that the terminal device requests to access.

In a possible design, the transceiver module 910 is specifically configured to: receive, from a core network device, the first request message from the first network device; and send the first response message to the first network device via the core network device.

It should be understood that the processing module 920 in the communication apparatus may be implemented by at least one processor or a processor-related circuit component, and the transceiver module 910 may be implemented by at least one transceiver, a transceiver-related circuit component, or a communication interface. Operations and/or functions of the modules in the communication apparatus are used to implement corresponding procedures of the method shown in FIG. 3, FIG. 4, FIG. 5, FIG. 6, or FIG. 8. For brevity, details are not described herein again. Optionally, the communication apparatus may further include a storage module. The storage module may be configured to store data and/or instructions. The transceiver module 910 and/or the processing module 920 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

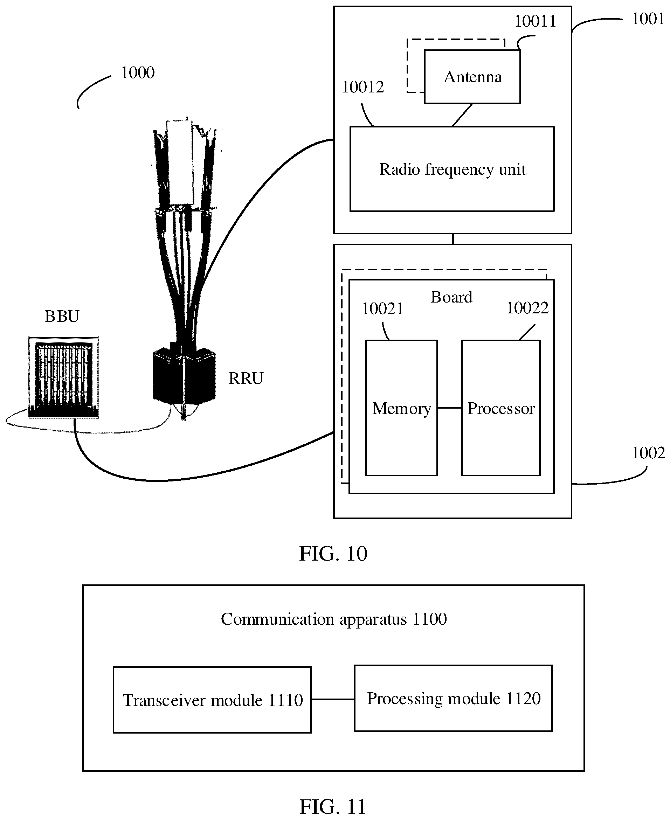

FIG. 10 is a schematic diagram of another structure of a communication apparatus according to an embodiment of this application. The communication apparatus may be specifically a network device, for example, a base station, and is configured to implement functions of a network device (for example, the first network device or the second network device) according to any one of the foregoing method embodiments.

The network device includes one or more radio frequency units, for example, a remote radio unit (remote radio unit, RRU) 1001 and one or more baseband units (baseband unit, BBU) (which may also be referred to as a digital unit (digital unit, DU)) 1002. The RRU 1001 may be referred to as a transceiver unit, a transceiver machine, a transceiver circuit, a transceiver, or the like, and may include at least one antenna 10011 and a radio frequency unit 10012. The RRU 1001 is mainly configured to: receive and send a radio frequency signal and perform conversion between the radio frequency signal and a baseband signal. The BBU 1002 is mainly configured to: perform baseband processing, control the base station, and the like. The RRU 1001 and the BBU 1002 may be physically disposed together; or may be physically separately disposed, that is, in a distributed base station.

The BBU 1002, also referred to as a processing unit, is a control center of the base station, and is mainly configured to implement baseband processing functions such as channel coding, multiplexing, modulation, and spectrum spreading. For example, the BBU (the processing unit) 1002 may be configured to control the base station to perform an operation procedure related to the network device in the foregoing method embodiments.

In an example, the BBU 1002 may include one or more boards, and a plurality of boards may jointly support a radio access network (for example, an LTE network) having a single access standard, or may separately support radio access networks (for example, an LTE network, a 5G network, or another network) having different access standards. The BBU 1002 may further include a memory 10021 and a processor 10022, and the memory 10021 is configured to store necessary instructions and data. The processor 10022 is configured to control the base station to perform a necessary action, for example, is configured to control the base station to perform a sending operation in the foregoing method embodiments. The memory 10021 and the processor 10022 may serve one or more boards. In other words, a memory and a processor may be disposed on each board. Alternatively, a plurality of boards may share a same memory and a same processor. In addition, a necessary circuit may further be disposed on each board.

An embodiment of this application further provides another communication apparatus. FIG. 11 is a schematic diagram of a structure of another communication apparatus according to an embodiment of this application. The communication apparatus 1100 includes a transceiver module 1110 and a processing module 1120. The communication apparatus may be configured to implement functions of the terminal device according to any one of the foregoing method embodiments. For example, the communication apparatus may be a terminal device, for example, a handheld terminal device or a vehicle-mounted terminal device. Alternatively, the communication apparatus may be a chip or a circuit included in a terminal device, or an apparatus including a terminal device, for example, various types of vehicles.

For example, when the communication apparatus performs an operation or step corresponding to the terminal device in the method embodiment shown in FIG. 4, the transceiver module 1110 is configured to receive third indication information from a first network device. The third indication information indicates the terminal device to include location information of the terminal device when reporting a measurement result of a second cell, and the second cell is a cell of the second network device. The processing module 1120 is configured to generate a measurement report, where the measurement report includes the location information of the terminal device. The transceiver module 1110 is further configured to send the measurement report to the first network device.

In a possible design, the transceiver module 1110 is further configured to send first indication information to the first network device. The first indication information indicates that the second cell is an NTN cell, or indicates that the second cell is an NTN cell and that the second cell supports at least two PLMNs.

In a possible design, the transceiver module 1110 is further configured to send cell information of the second cell to the first network device. The cell information of the second cell includes information about the at least two PLMNs supported by the second cell.

The processing module 1120 in the communication apparatus may be implemented by at least one processor or a processor-related circuit component, and the transceiver module 1110 may be implemented by at least one transceiver, a transceiver-related circuit component, or a communication interface. Operations and/or functions of the modules in the communication apparatus are used to implement corresponding procedures of the method shown in FIG. 4, FIG. 5, FIG. 6, or FIG. 8. For brevity, details are not described herein again. Optionally, the communication apparatus may further include a storage module. The storage module may be configured to store data and/or instructions. The transceiver module 1110 and/or the processing module 1120 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

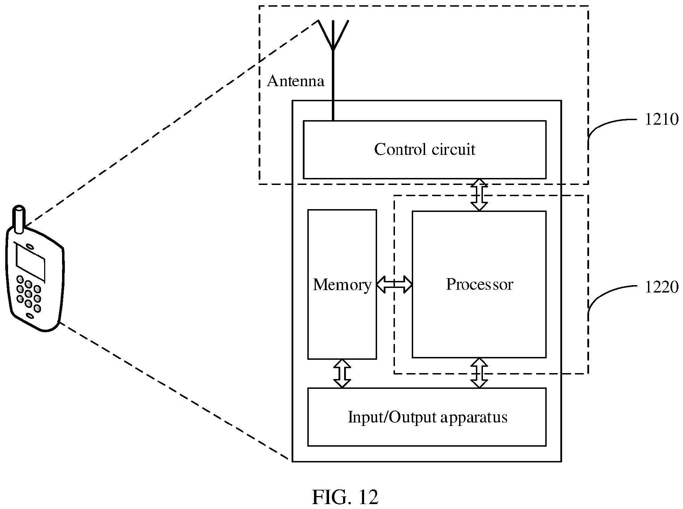

FIG. 12 is a schematic diagram of another structure of another communication apparatus according to an embodiment of this application. The communication apparatus may be specifically a terminal device. The communication apparatus may be configured to implement functions of the terminal device according to any one of the foregoing method embodiments. For ease of understanding and illustration, in FIG. 12, a mobile phone is used as an example of the terminal device. As shown in FIG. 12, the terminal device includes a processor, and may further include a memory. Certainly, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and a radio frequency circuit that have a transceiver function may be considered as a transceiver unit of the terminal device, and a processor that has a processing function may be considered as a processing unit of the terminal device. As shown in FIG. 12, the terminal device includes a transceiver unit 1210 and a processing unit 1220. The transceiver unit may also be referred to as a transceiver machine, a transceiver, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit sometimes may also be referred to as a transceiver, a transceiver machine, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 1210 is configured to perform a sending operation and a receiving operation on a terminal device side in the foregoing method embodiments, and the processing unit 1220 is configured to perform an operation other than the receiving operation and the sending operation of the terminal device in the foregoing method embodiments.

An embodiment of this application further provides a chip system, including a processor. The processor is coupled to a memory. The memory is configured to store a program or instructions. When the program or the instructions are executed by the processor, the chip system is enabled to implement the method corresponding to the terminal device or the method corresponding to the network device according to any one of the foregoing method embodiments.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

An embodiment of this application further provides a communication system. The communication system includes a first network device, a second network device, and at least one terminal device. The first network device may be a source network device, and the second network device may be a target network device. Optionally, the communication system may further include a core network device.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may further be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

It should be understood that numbers in various embodiments of this application are merely used for differentiation for ease of description. Sequence numbers of the foregoing processes or steps do not mean execution sequences. The execution sequences of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first network device, a first request message to a second network device, wherein the first request message is used to request to access a terminal device to a second cell of the second network device, the first request message comprises location information of the terminal device and information about a first public land mobile network PLMN, and the first PLMN is a target PLMN that is determined by the first network device and that is accessed by the terminal device; and
receiving, by the first network device, a first response message from the second network device, wherein the first response message comprises information about a second PLMN, and the second PLMN is a target PLMN that the second network device allows the terminal device to access, wherein
a location of the terminal device is located outside a first area corresponding to the first PLMN, and is located within a second area corresponding to the second PLMN, and both the first PLMN and the second PLMN are PLMNs supported by the second network device.

2. The method according to claim 1, wherein the method further comprises:
receiving, by the first network device, first indication information from the terminal device or the second network device, wherein the first indication information indicates that the second cell is an NTN cell, or indicates that the second cell is an NTN cell and that the second cell supports at least two PLMNs.

3. The method according to claim 1 or 2, wherein the method further comprises:
receiving, by the first network device, cell information of the second cell from the terminal device or the second network device, wherein the cell information of the second cell comprises information about the at least two PLMNs supported by the second cell, and the at least two PLMNs comprise the first PLMN and the second PLMN.

4. The method according to any one of claims 1 to 3, wherein the first response message further comprises second indication information indicating that the location of the terminal device does not match the first PLMN that the terminal device requests to access.

5. The method according to any one of claims 1 to 4, wherein the method further comprises:
sending, by the first network device, third indication information to the terminal device, wherein the third indication information indicates the terminal device to comprise the location information of the terminal device when reporting a measurement result of the second cell.

6. The method according to any one of claims 1 to 5, wherein the sending, by a first network device, a first request message to a second network device comprises:
sending, by the first network device, the first request message to the second network device via a core network device; and
the receiving, by the first network device, a first response message from the second network device comprises:
receiving, by the first network device from the core network device, the first response message from the second network device.

7. A communication method, wherein the method comprises:
receiving, by a second network device, a first request message from a first network device, wherein the first request message is used to request to access a terminal device to a second cell of the second network device, the first request message comprises location information of the terminal device and information about a first PLMN, and the first PLMN is a target PLMN that is determined by the first network device and that is accessed by the terminal device;
if a location of the terminal device is located outside a first area corresponding to the first PLMN, and is located within a second area corresponding to a second PLMN, determining, by the second network device, the second PLMN as a target PLMN that the terminal device is allowed to access, wherein both the first PLMN and the second PLMN are PLMNs supported by the second network device; and
sending, by the second network device, a first response message to the first network device, wherein the first response message comprises information about the second PLMN.

8. The method according to claim 7, wherein the method further comprises:
sending, by the second network device, first indication information to the first network device, wherein the first indication information indicates that the second cell is an NTN cell, or indicates that the second cell is an NTN cell and that the second cell supports at least two PLMNs.

9. The method according to claim 7 or 8, wherein the method further comprises:
sending, by the second network device, cell information of the second cell to the first network device, wherein the cell information of the second cell comprises information about the at least two PLMNs supported by the second cell, and the at least two PLMNs comprise the first PLMN and the second PLMN.

10. The method according to any one of claims 7 to 9, wherein the first response message further comprises second indication information indicating that the location of the terminal device does not match the first PLMN that the terminal device requests to access.

11. The method according to any one of claims 1 to 10, wherein the receiving, by a second network device, a first request message from a first network device comprises:
receiving, by the second network device from a core network device, the first request message from the first network device; and
the sending, by the second network device, a first response message to the first network device comprises:
sending, by the second network device, the first response message to the first network device via the core network device.

12. A communication method, wherein the method comprises:
receiving, by a terminal device, third indication information from a first network device, wherein the third indication information indicates the terminal device to comprise location information of the terminal device when reporting a measurement result of a second cell, the second cell supports at least two PLMNs, and the second cell is a cell of the second network device; and
sending, by the terminal device, a measurement report to the first network device, wherein the measurement report comprises the location information of the terminal device.

13. The method according to claim 12, wherein the method further comprises:
sending, by the terminal device, first indication information to the first network device, wherein the first indication information indicates that the second cell is an NTN cell, or indicates that the second cell is an NTN cell and that the second cell supports at least two PLMNs.

14. The method according to claim 12 or 13, wherein the method further comprises:
sending, by the terminal device, cell information of the second cell to the first network device, wherein the cell information of the second cell comprises information about the at least two PLMNs supported by the second cell.

15. A communication apparatus, wherein the apparatus comprises units configured to perform the steps of the method according to any one of claims 1 to 6, comprises units configured to perform the steps of the method according to any one of claims 7 to 11, or comprises units configured to perform the steps of the method according to any one of claims 12 to 14.

16. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 6, the method according to any one of claims 7 to 11, or the method according to any one of claims 12 to 14.

17. A computer-readable storage medium, configured to store instructions, wherein when the instructions are executed, the method according to any one of claims 1 to 6, the method according to any one of claims 7 to 11, or the method according to any one of claims 12 to 14 is implemented.

18. A communication apparatus, comprising a processor and an interface circuit, wherein
the interface circuit is configured to exchange code instructions with the processor; and
the processor is configured to run the code instructions to perform the method according to any one of claims 1 to 6, the method according to any one of claims 7 to 11, or the method according to any one of claims 12 to 14.

19. A computer program product, wherein when a computer reads and executes the computer program product, the computer is enabled to perform the method according to any one of claims 1 to 6, the method according to any one of claims 7 to 11, or the method according to any one of claims 12 to 14.
